# EUROPÄISCHE PATENTSCHRIFT

(11) **EP 0 524 420 B1**
(45) Veröffentlichungstag und Bekanntmachung des Hinweises auf die Patenterteilung: **20.12.1995**
(21) Anmeldenummer: 92110028.5
(22) Anmeldetag: 15.06.1992
(51) Int. Cl.: F16L 55/027

(54) **Geräuscharme Druck-Entspannungseinrichtung**
Low-noise pressure reducing device
Dispositif de réduction de pression à faible bruit

(30) Priorität: 26.07.1991 CH 2242/91
(43) Veröffentlichungstag der Anmeldung: 27.01.1993
(73) Patentinhaber: LUWA AKTIENGESELLSCHAFT, CH-8047 Zürich (CH)
(72) Erfinder: Tomic, Stevan, CH-8053 Zürich (CH); Kucera, Pavel Samuel, CH-8048 Zürich (CH)
(74) Vertreter: Patentanwälte Schaad, Balass, Menzl & Partner AG

(56) Entgegenhaltungen:
- DE-A- 2 416 064
- NL-A- 7 416 072
- US-A- 2 807 329

## Beschreibung

Die Erfindung betrifft eine geräuscharme Druck-Entspannungseinrichtung mit mehreren in einem Strömungskanal für ein flüssiges, gasförmiges oder dampfförmiges Medium angeordneten und durch Lochplatten gebildeten Blenden.

Bekannt ist eine solche Einrichtung im austrittseitigen und sich erweiternden Flansch eines Ventils, in welchem sich im Strömungsweg folgende Lochplatten zunehmende Durchtrittsquerschnitte dadurch freigeben, dass innerhalb einer gegebenen einheitlichen Plattenfläche die mit der Lochung besetzte Fläche zunimmt. Die Lochplatten sind dabei an ihrem Umfang eingespannt. Eine Einrichtung dieser Art ist im Prospekt ECKHARDT Produkt-Information PRI-22 (05.85) "Einsitz-Stellventil mit Silencer" beschrieben und dargestellt.

Um der Druckentspannung in jedem Anwendungsfall einen vorbestimmten, optimierten Verlauf zu geben, muss demnach ein Satz von Lochplatten mit unterschiedlicher, auf die in jeder Stufe benötigte freie Durchtrittsfläche abgestimmter Lochung vorhanden sein. Die Herstellung dieser Löcher in durch Material-Wahl und -Dicke festigkeitsmässig stabil auszulegenden Platten ist sehr aufwendig.

Der vorliegenden Erfindung lag daher die Aufgabe zugrunde, eine geräuscharme Druck-Entspannungseinrichtung mit herstellungsmässig wesentlich einfacheren Mitteln zu schaffen, die auch ein leichtes Anpassen an unterschiedliche Sollwerte der Druckdifferenz ermöglicht und aufgrund der Konstruktion in der Stabilität optimal ist.

Zur Lösung dieser Aufgaben weist die Druck-Entspannungseinrichtung die Merkmale nach Anspruch 1 auf.

Die Ausgestaltung der Blenden als Materialstreifen einheitlicher Lochung und Breite lässt solche Blenden als Abschnitte dieser Materialstreifen ausserordentlich kostengünstig herstellen, wobei dem geforderten unterschiedlichen Strömungsquerschnitt durch eine Veränderung der zweiten Flächendimension auf einfache Weise Rechnung getragen werden kann.

Eine besonders vorteilhafte Ausgestaltung der Entspannungseinrichtung im Bezug auf den in einer Dimension konstanten Querschnitt des Entspannungskanales ergibt sich, wenn dieser zwischen im Abstand und parallel zueinander sich erstreckenden Platten gebildet ist, zwischen welchen Platten die gelochten Materilastreifen als zueinander konzentrisch angeordnete Ringe festgehalten sind und wenn in einer der Platten eine zentrale Eintrittsöffnung aufweist.

Ein gelochter Materialstreifen, von dem zur Bildung von Ringen mit unterschiedlich grossen Durchmessern jeweils nur ein entprechender Materialstreifenabschnitt abgelängt zu werden braucht, ist im Bezug auf die Herstellung und den Zusammenbau zu einer fertigen Einrichtung sehr einfach und mit wenig Aufwand verbunden. Die zylindrische Ringform der gelochten Materialstreifen ist festigkeitsmässig optimal.

In weiterer bevorzugter Ausgestaltung weisen die beiden Platten in jeder der einander zugekehrten Plattenflächen zueinander konzentrische kreisförmige Rillen auf, in denen jeweils ein einen Ring bildender gelochter Materialstreifen mit seinen gegenüberliegenden Rändern gehalten ist. Mit diser sehr einfachen Bauweise wird eine optimale Festigkeit der den Drücken ausgesetzten Teile erzielt.

Weitere Einzelheite und Vorteile der Erfindung ergeben sich aus der nachfolgenden Beschreibung und den Zeichnungen, in denen ein Ausführungsbeispiel des Erfindungsgegenstandes dargestellt ist. Es zeigen:
- Fig. 1: einen Axialschnitt durch die eine Hälfte einer bezüglich der Symmetrieachse auf beiden Seiten gleich ausgebildeten Druck-Entspannungseinrichtung;
- Fig. 2: ausschnittweise einen Vertikalschnitt im Abstand von der Symmetrieachse, senkrecht auf einen Materialstreifen gesehen.

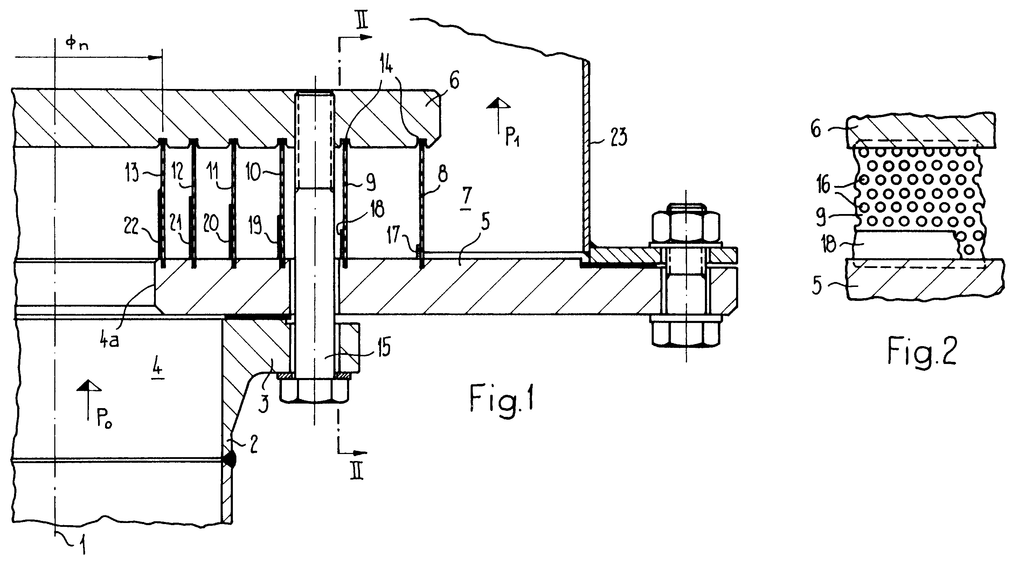

Die in Fig. 1 dargestellte Druck-Entspannungseinrichtung ist zu beiden Seiten der Symmetrieachse 1 gleich ausgebildet. Ein abgebrochen dargestelltes Rohrleitungsende 2 mit einem Radialflansch 3 bildet einen axialen Eintrittskanalabschnitt 4, an den sich zwischen einer Grundplatte 5 und einer im Abstand und parallel zu dieser angeordneten Gegenplatte 6 ein sich erweiternder Entspannungskanal 7 über eine zentrale Eintrittsöffnung 4a anschliesst. Im Entspannungskanal 7 sind zwischen der Grundplatte 5 und der Gegenplatte 6 eine Mehrzahl von zueinander konzentrische, zylindrische Ringe bildende gelochte Materialstreifen 8, 9, 10, 11, 12 und 13 festgehalten. Zu diesem Zweck sind in den einander zugekehrten Plattenflächen der Grundplatte 5 und der Gegenplatte 6 kreisringförmige und zueinander konzentrische Rillen 14 auf gleichen Durchmessern bei beiden Platten, d.h. genau einander gegenüberstehend, ausgebildet. In eine dieser Rillen 14 greift jeder der zu einem Ring geformten Materialstreifen 8-13 jeweils mit seinem oberen und unteren Rand ein. In dieser Postition sind die Materialstreifen durch Verspannen der Grundplatte 5 und der Gegenplatte 6 gegeneinander mit Hilfe von achsparallelen Spannschrauben 15 festgehalten, die gleichzeitig den Radialflansch 3 des Rohrleitungsendes durchsetzen.

Jeder der einen Ring bildende Materialstreifen 8-13 besteht aus einem Lochblech mit einer einheitlichen und gleichmässig verteilten Lochung 16, wie aus Fig. 2 hervorgeht.

Die Ringe 8-13 lassen sich auf sehr einfache Weise dadurch herstellen, dass von einem langen Materialstreifen ein dem jeweiligen Ringdurchmesser umfangsmässig entsprechender Materialstreifenabschnitt abgelängt wird, so dass die Enden des Abschnittes in einer Fuge zusammenstossen, um den jeweiligen geschlossenen Ring zu bilden.

Grundsätzlich kann die radiale Lage der die Blenden bildenden Ringe 8-13 frei gewählt werden, womit dank Umfangsveränderung auch der freie Stömungsquerschnitt jedes Ringes bestimmt ist. In Strömungsrichtung wird damit der für die Druckentspannung massgebliche freie Strömungsquerschnitt von dem radial innersten Materialstreifen-Ring 13 zum äussersten Materialstreifen-Ring 8 hin trotz einheitlicher Lochung zunehmend grösser. Es ist jedoch möglich, auf sehr einfache Weise den Entspannungsverlauf bei eventuell vorgegebener Lage bzw. Umfang der Ringe unabhängig zu beeinflussen. Dies kann dadurch geschehen, dass bei jedem der Materialstreifen-Ringe ein Teilbereich durch einen hier zum Beispiel bei jedem Ring unterschiedlichen grossen Abdeckstreifen abgedeckt wird, nämlich durch den Abdeckstreifen 17 beim äussersten Materialstreifen-Ring 8 und die weiteren Abdeckstreifen 18-22 bei den zum Zentrum hin sich anschliessenden Materialstreifen-Ringen 9-13, wobei der am innersten Ring 13 angeordnete Abdeckstreifen 22 am grössten ist. In Fig. 2 zeigt ein abgebrochen dargestellter Abdeckstreifen 18 auf dem Materialstreifen-Ring 9 das zur Anwendung kommende Prinzip. Für die Wahl oder Abstufung der Breite der bei den einzelnen Ringen verwendeten Abdeckstreifen besteht jedoch keinerlei Vorschrift.

Die Grundplatte 5 ist im Durchmesser grösser als die Gegenplatte 6 und dient dazu, am Aussenrand ein in Fig. 1 abgebrochen dargestelltes Anschlussrohr 23 anzuflanschen, welches die Gegenplatte 6 im radialen Abstand umschliesst.

Das in den axialen Strömungskanalabschnitt 4 mit dem Druck P₀ einströmende Medium weist am Ende des anschliessenden, radial sich erweiternden Strömungskanalabschnitt 7 in dem vom Anschlussrohr 23 umschlossenen Raum den reduzierten Druck P₁ auf.

Da die als Blenden zur Anwendung kommenden Materialstreifen ein vergleichsweise kleine Breite haben und als Ringe einegestzt werden, kommt man mit einer Materialstärke aus, bei welcher die Lochung durch Stanzen hergestellt werden kann. Mithin können die gelochten Materialstreifen kostengünstig hergestellt werden.

Eine wesentliche Eigenschaft der erfindungsgemässen Lösung besteht darin, dass diese die Forderungen der Schalldämpfung in idealer Weise erfüllen lässt. Hierfür ist massgeblich, dass die freien Durchtrittsquerschnitte aller Blenden, d.h. Entspannungsstufen, sich mit geringem Aufwand optimieren lassen, wozu die Möglichkeit, Abdeckstreifen unterschiedlicher Breite einzusetzen, wesentlichen Anteil hat. Damit gelingt es jedenfalls, unabhängig vom Querschnittsverlauf des Entspannungskanals selbst, sowie ohne aufwendige Blendenanfertigungen, die Entspannung in allen Stufen der jeweiligen Einrichtung im unterkritischen Bereich stattfinden zu lassen.

## Patentansprüche

1. Geräuscharme Druck-Entspannungseinrichtung mit mehreren in einem Entspannungskanal (7) für ein flüssiges, gasförmiges oder dampfförmiges Medium in Strömungsrichtung sich folgend angeordneten und je den Kanalquerschnitt besetzenden Blenden (8-13), die mit Lochungen (16) versehen sind, dadurch gekennzeichnet, dass in dem rechteckig geformten und in einer Dimension konstanten Kanalquerschnitt des Entspannungskanales alle Blenden über deren Fläche eine einheitliche Lochung aufweisen und als Materialstreifen gleicher Breite ausgebildet sind, wobei der Strömungsquerschnitt je Blende ausschliesslich durch die zur Verfügung gestellte freie Blendenfläche bestimmt ist.

2. Einrichtung nach Anspruch 1, dadurch gekennzeichnet, dass der Kanalquerschnitt des Entspannungskanales (7) in der zweiten Dimension in Strömungsrichtung zunehmend ausgestaltet ist.

3. Einrichtung nach Anpruch 1 oder 2, dass sich in Strömungsrichtung im Entspannungskanal (7) folgenden Blenden (8-13) Abdeckstreifen (17-22) unterschiedlicher Breite zugeordnet sind.

4. Einrichtung nach einem der vorangehenden Ansprüche, dadurch gekennzeichnet, dass der Entspannungskanal (7) zwischen im Abstand und parallel zueinander sich erstreckenden Platten (5, 6) gebildet ist, zwischen welchen Platten in radialen Abständen von einander zueinander geschlossene konzentrische Ringe bildende gelochte Materialstreifen (8-13) festgehalten sind und dass eine der Platten eine bezüglich der Ringe zentrale Eintrittsöffnung (4a) zum Entspannungskanal aufweist .

5. Einrichtung nach Anspruch 4, dadurch gekennzeichnet, dass die im Zentrum die Eintrittsöffnung (4a) aufweisende Platte eine Grundplatte (5) und die parallel zu dieser angeordnete Platte eine Gegenplatte (6) ist, in jeder der einander zugekehrten Plattenflächen zueinander konzentrische, kreisförmige Rillen (14) mit jeweils identischem Durchmesser ausgebildet sind, in denen je ein Materialstreifen (8-13) mit seinen gegenüberliegenden Rändern gehalten ist.

6. Einrichtung nach Anspruch 5, dadurch gekennzeichnet, dass die Grundplatte (5) und die Gegenplatte (6) mit den zwischen diesen gehaltenen Materialstreifen (8-13) mittels achsparalleler Spannschrauben (15) miteinander verbunden sind.

7. Einrichtung nach Anspruch 5, dadurch gekennzeichnet, dass an die Eintrittsöffnung in der Grundplatte (5) ein einen Radialflansch (3) aufweisendes einen Eintrittskanalabschnitt (4) bildendes Rohrende (2) anschliesst,
das mittels der den Radialflansch durchsetzenden Spannschrauben (15) angeflanscht ist und dass die Grundplatte im Durchmesser grösser als die Gegenplatte (6) ist und zum Anflanschen eines die Gegenplatte im radialen Abstand umschliessenden Anschlussrohrs (23) dient.

## Claims

1. A low-noise pressure reducing device having a plurality of diaphragms (8 to 13) disposed one after another in the direction of flow in an expansion channel (7) for a fluid, gaseous or vaporised medium and occupying the channel cross-section and which are provided with perforations (16), characterised in that in the rectangularly shaped and, in one dimension, constant channel cross-section of the expansion channel, all the diaphragms have uniform perforation over their surface area and are constructed as strips of material of the same width, the flow cross-section per diaphragm being determined solely by the available free diaphragm surface area.

2. An arrangement according to claim 1, characterised in that the channel cross-section of the expansion channel (7) is of an increasing configuration in the second dimension in the direction of flow.

3. An arrangement according to claim 1 or 2, characterised in that masking strips (17 to 22) of different widths are associated with diaphragms (8 to 13) which are disposed one after another in the expansion channel (7) in the direction of flow.

4. An arrangement according to one of the preceding claims, characterised in that the expansion channel (7) is formed between panels (5, 6) which are spaced apart and extend parallel with one another and between which panels perforated strips of material (8 to 13) which form concentric rings closed in respect of one another are supported and in that one of the panels comprises an inlet aperture (4a) to the expansion channel which is central in relation to the rings.

5. An arrangement according to claim 4, characterised in that the plate which has the inlet aperture (4a) in the centre is a base plate (5) while the panel disposed parallel therewith is a mating panel (6) and in that in each of the facing panel surfaces there are mutually concentric circular grooves (14) of in each case identical diameter and in which there are respectively supported oppositely disposed edges of material strips (8 to 13).

6. An arrangement according to claim 5, characterised in that the base plate (5) and the mating plate (6) with the strips of material (8 to 13) held between them are connected to one another by means of axially parallel clamping screws (15).

7. An arrangement according to claim 5, characterised in that at the inlet aperture in the base plate (5) there is, comprising a radial flange (3) and forming an inlet passage portion (4), a tube end (2) which is flanged on by means of the clamping screws (15) which traverse the radial flange and in that the base plate is of larger diameter than the mating plate (6) and serves for flanging-on a connecting tube (23) which at a radial distance surrounds the mating plate.

## Revendications

1. Dispositif de réduction de pression à faible bruit avec plusieurs obturateurs (8-13) disposés les uns derrière les autres dans la direction de l'écoulement dans un canal de réduction de pression (7) pour un milieu fluide, gazeux ou sous forme de vapeur, qui sont pourvus de trous (16), caractérisé en ce que, dans la section transversale de forme rectangulaire et de section constante dans une dimension, du canal de réduction de pression, tous les obturateurs présentent une perforation homogène et présentent la forme de rubans de matériau de même largeur, la section transversale d'écoulement de chaque obturateur étant déterminée exclusivement par la surface libre des obturateurs disponibles.

2. Dispositif selon la revendication 1, caractérisé en ce que la section transversale du canal de réduction de pression (7) est configurée de manière croissante dans la direction de l'écoulement dans sa deuxième dimension.

3. Dispositif selon la revendication 1 ou 2, caractérisé en ce que des rubans de recouvrement (17-22) de différentes largeurs sont affectés aux obturateurs (8-13) se suivant dans la direction d'écoulement dans le canal de réduction de pression (7).

4. Dispositif selon l'une quelconque des revendications précédentes, caractérisé en ce que le canal de réduction de pression (7) est formé entre des plaques (5, 6) s'étendant parallèlement et à une certaine distance l'une de l'autre, entre lesquelles sont fixés des rubans de matériau (8-13) à trous formant des anneaux concentriques, fermés les uns dans les autres et disposées à une certaine distance radiale les uns des autres, et en ce que l'une des plaques présente une ouverture d'entrée (4a) dans le canal de réduction de pression,centrée, par rapport aux anneaux.

5. Dispositif selon la revendication 4, caractérisé en ce que la plaque présentant au centre l'ouverture d'entrée (4a) est une plaque de fond (5) et en ce que la plaque disposée parallèlement à celle-ci est une plaque opposée (6), des gorges (14) circulaires concentriques les unes aux autres étant formées ,avec à chaque fois un diamètre identique dans chacune des surface des plaques tournées l'une vers l'autre, dans lesquelles est maintenu à chaque fois un ruban de matériau (8-13) par ses bords opposés.

6. Dispositif selon la revendication 5, caractérisé en ce que la plaque de base (5) et la plaque opposée (6) sont raccordées l'une à l'autre avec les rubans de matériau (8-13) maintenus entre elles, au moyen de vis de serrage (15),parallèles à l'axe.

7. Dispositif selon la revendication 5, caractérisé en ce qu'une extrémité de conduite (2) formant une section de canal d'entrée (4) et présentant une bride radiale (3) est raccordée à l'ouverture d'entrée dans la plaque de fond (5), cette extrémité de conduite étant maintenue par les vis de serrage (15) traversant la bride radiale, et en ce que la plaque de fond a un diamètre plus grand que celui de la plaque opposée (6) et sert à immobiliser tube de raccordement (23) entourant la plaque opposée,à une certaine distance radiale.
